# EUROPEAN PATENT APPLICATION

(11) **EP 1 338 206 A1**
(43) Date of publication of application: **27.08.2003**
(21) Application number: 01998232.1
(22) Date of filing: 29.11.2001
(51) Int. Cl.: A23C 11/10, A23L 1/212, A23L 2/02, A23L 2/84

(54) **LIQUID PRODUCT OF VEGETABLE ORIGIN AS MILK SUBSTITUTE**

(30) Priority: 30.11.2000 ES 200002859
(71) Applicant: UNIVERSITAT AUTONOMA DE BARCELONA, 08193 Bellaterra (ES)
(72) Inventor: GUAMIS LOPEZ, Buenaventura, E-08190 SANT CUGAT DEL VALLES (ES); QUEVEDO TERRI, Joan Miquel, E-08015 Barcelona (ES); TRUJILLO MESA, Antonio Jose, E-08980 SANT FELIU DE LLOBREGAT (ES); FELIPE CUYAS, Xavier, E-08470 SANT CELONI (ES)
(74) Representative: Ponti Sales, Adelaida
(86) International application number: ES0100467
(87) International publication number: WO02043504

(57) **Abstract**

Relates to a liquid product of plant origin that can be used as an alternative to liquid milk of animal origin. It is characterised in that it contains essentially an extract of tiger nut, an extract of quinoa and a mixture of enzymes of the α-amylase type. Said mixture includes α-amylases of different optimum temperatures of hydrolysis of starch in order to avoid jellification of the starch in preservation heat treatments, while at the same time providing maltodextrins and glucose.

## Description

### FIELD OF THE INVENTION

This invention relates to a liquid product of plant origin that can be used as an alternative to liquid milk of animal origin.

### BACKGROUND OF THE INVENTION

There exists in the market a wide variety of products of plant origin put forward as alternatives to liquid milk of animal origin for food. It is asserted that those products provide a nutritional value comparable to that of milk but without providing cholesterol and that they avoid the appearance of problems associated with intolerance of lactose and some proteins of cow's milk.

The majority of said products are mostly made up of soya and involve several disadvantages such as antinutritional factors, a reduction of their nutritive value as a result of heat treatments at high temperatures and/or repeated heat treatments, unpleasant flavours and consumer mistrust due to the possibility of transgenic species of that plant having been used.

As an alternative there exists tiger nut beverage (horchata), which although it has a protein concentration lower than that of cow's milk and therefore is not a complete nutritional substitute for milk, does have in its favour a very widely accepted flavour.

Tiger nut beverage is made from a tuber known "chufa" or tiger nut (*Cyperus esculentus*) which grows spontaneously in the Nile valley and now grows in various parts of Africa and is cultivated on a large scale in Spain in the Valencian Community, particularly in the zone of Alboraya and its hinterland. The origin of the use of this tuber for making tiger nut beverage (horchata) is exclusive to the Valencian Community, to which it may have been introduced by the Arabs.

In the traditional way of making this tiger nut beverage the tubers are selected and then washed, hydrated and ground with drinking water; the triturate is sieved, sweetened with sugar and cooled to 3-4°C. For each kilogram of tiger nuts approximately 6 litres of water and 140 grams of sugar are used, and 5 to 6 litres of tiger nut beverage are obtained. Occasionally, the beverage can be flavoured with small quantities of cinnamon and lemon. The resulting tiger nut beverage is a nutritious and refreshing drink of a milky-white colour, with mild and pleasant characteristic flavour and bouquet. The beverage is consumed very cold, or even partially frozen in the form of an iced drink.

The nutritional value of the tiger nut beverage arises from the very composition of the tiger nut. The chemical composition of the tiger nut is as follows:
- Humidity 10.5%
- Proteins (Nx 6.25) 8.5%
- Fats 22.0%
- Fibre 8.5%
- Ashes 1.7%
- Nitrogen-free extractive matter 48.8%
Some notable aspects of the composition of the tiger nut are as follows:

### A. Lipids

Approximately 85% are unsaturated fatty acids, with high content in its composition of oleic acid (75%) and linoleic acid (10%). The tiger nut does not contain cholesterol.

Linoleic acid is an essential fatty acid and the recommended daily intake thereof is from 15 to 20 grams a day. It plays a notable role in the synthesis of prostaglandins (modulators of all cellular activities, they control contraction of the smooth muscles, glandular secretions, reabsorption of water and of electrolytes, neurotransmission, aggregation of platelets, induction of fever and of inflammatory responses).

### B. Proteins

The percentage of protein in the tiger nut is approximately 10% of its dry substance. Proteins thus share with fibre the third position in importance of the components of the tuber. The amino acid most abundant in the tiger nut is arginine, while it also has a high content of phenylaniline and tyrosine and lower percentages of other amino acids such as leucine, isoleucine, lysine, methionine, cysteine, threonine, valine and tryptophene. In total, it provides 41 grams of essential amino acids per 100 grams of total protein.

### C. Minerals

The tiger nut provides a significant quantity of minerals, particularly potassium, phosphorus, calcium, magnesium, zinc and iron.

Potassium is the macroelement found in the largest proportion (543.70 mg per 100 mg of tiger nut soluble substance). Potassium plays an important role in most bodily functions such as cellular metabolism, protein synthesis, synthesis of glucides and neuromuscular excitability. Its main functions are regulation of cell water content, the activating role of the enzyme systems and increase of neuromuscular excitability.

The tiger nut also contains a high percentage of phosphorus (285 mg per 100 g of tiger nut sol. subst.) and calcium (103 mg per 100 g of tiger nut sol. subst.). Calcium is fundamental in growth in order to achieve good calcification of the bones, and for adults in order to prevent decalcification.

The tiger nut contains 95.50 mg of magnesium per 100 g of tiger nut sol. subst. Magnesium is to be found in the cells, where it carries out functions as an activator of several enzymes and also plays a role in transmission of nerve pulses at the level of the motor plate. In the light of recent information, its important anti-stress role should also be highlighted.

The tiger nut contains 4.32 mg of zinc per 100 g of tiger nut sol. subst.. It is a component of important enzymes such as alkaline phosphatase and carbonic anhydrase. A daily intake of 10 to 15 mg is considered necessary.

Finally, the tiger nut provides 4.21 mg of iron per 100 g of tiger nut sol. subst. Iron is necessary for the formation of haemoglobin, each molecule of which contains one atom of iron. The organism responds to iron deficiency with anaemia. Iron-deficiency anaemia is not only the main cause among the various causes of anaemia, but also the main nutritional deficiency in the western world. A daily intake of 10 to 15 mg is considered necessary. It is important to remember that milk contains only a very small quantity of iron.

### D. Carbohydrates

Starch is the most abundant of the carbohydrates in the tiger nut, accounting for between 30 and 40% of the weight of the tuber.

Free sugars are next in importance to starch. Sucrose makes up nearly all of them, accounting for some 12.5% of the weight of the tuber.

The tiger nut also contains reducing sugars (α-glucose, β-glucose, fructose and galactose), whose essential function is to provide energy.

### E. Fibre

Most of the fibre contained in the tiger nut is cellulose (8.5%). Vegetable fibre is the non-digestible and non-absorbable part of many foods of plant origin. It is made up of substances of different chemical composition, although most of them are polysaccharides. It is also known as dietary fibre and food fibre. Although it might be considered a component of little use, since it is eliminated with the faeces, in recent years its properties have been studied with interest following publication of the highly probable existence of a link between low ingestion of vegetable fibre and certain illnesses.

The composition of tiger nut beverage per 100 cc approximately is:

| | |
|---|---|
| Proteins | 1.5 g |
| Lipids | 3.2 g |
| Carbohydrates | 16.4 g |
| Fibre | 1.6 g |

| Minerals: | |
|---|---|
| Phosphorus | 23 mg |
| Magnesium | 6.95 mg |
| Manganese | 0.09 mg |
| Calcium | 8.7 mg |
| Iron | 0.32 mg |
| Zinc | 0.36 mg |
| Sodium | 0.53 mg |
| Potassium | 74.6 mg |
| Iodine | 0.17 µg |

| Vitamins: | |
|---|---|
| Vit C | 0.88 mg |
| Vit A | 0.102 mg |
| Vit D and Vit E | |

From all that has been outlined above, we can conclude that tiger nut beverage (horchata) is a refreshing food product that has a high content of unsaturated fatty acids, and especially linoleic acid, without contributing cholesterol, which makes it a suitable food for diets of the elderly and of children. Its high energy value should also be stressed, which reinforces its use for children and sportsmen, as well as its high content in potassium which, as noted above, plays an important role in the nervous system. Similarly, its high fibre content makes it recommendable as a regulator of bowel movement and preventer of illnesses such as cancer of the bowel, while it is also known for its astringent properties in cases of intestinal malfunctioning.

Tiger nut beverage exceeds milk as regards contribution of iron, given that milk has little of that mineral. The nutritional value of tiger nut beverage is nevertheless insufficient, given that its protein content is low.

The option of supplementing tiger nut beverage by addition of milk proteins would alter its flavour and astringent vegetable character and would rule it out for potential consumers seeking products of purely vegetable origin. The addition of soya protein would bring with it problems of flavour, as well as the possibility of introducing anti-nutritional factors if the soya were not of suitable quality.

### DESCRIPTION OF THE INVENTION

This invention relates to a liquid product of plant origin, characterised in that it contains essentially an extract of tiger nut, an extract of quinoa and a mixture of enzymes of the α-amylase type. Said mixture of enzymes of α-amylase type includes α-amylases of different optimum temperatures of hydrolysis of starch, in order to avoid jellification of the starch in preservation heat treatments, while at the same time providing maltodextrins and glucose.

The plant liquid product of the invention includes between 5% and 20%, preferably between 8% and 16%, of extract of tiger nut, and between 5% and 20%, preferably between 7% and 10%, of extract of quinoa.

Quinoa (*Chenopodium quinoa Willdenow*) is a dicotyledonous plant considered to be a pseudo-cereal, which is cultivated in the region of the Andes high plateau in South America, and requiring highly specific climatic conditions for its growth, principally altitudes exceeding 3,000 metres above sea level.

Some varieties of this plant which are suitable for use in the form of fine flour in a plant-origin liquid product according to the invention are Kancolla and sweets such as Sajama, Cheweca and Blanca Juli, which have the following physico-chemical composition:

| | |
|---|---|
| Humidity | 9.5-12.5% |
| Carbohydrates | 70-73.5% |
| Proteins | 16-23% |
| Fats | 4.3-5.5% |
| Ashes | 1.5-1.8% |
| Fibre | 0.7-1.2% |

The proteins provided by quinoa are of high biological value, rich in lysine, methionine, cystine, arginine and histidine.

The carbohydrates which compose quinoa are mostly made up of starch and approximately 5% of sugars.

Approximately 50% of the fat content of quinoa is linoleic acid, essential for the human diet.

Quinoa also has high calcium and phosphorus content.

Advantageously, the addition of an extract of quinoa to an extract of tiger nut in a liquid product of the invention allows the protein value of the end product to be increased with respect to tiger nut beverage.

The presence of a high percentage of starch in the composition of extracts of tiger nut and quinoa confers upon them the property of jellification when sterilisation heat treatments are applied to them, so that the rheological behaviour of the product changes completely in such a way that it loses its characteristic drinkable liquid quality. This jellification can be prevented by the addition of α-amylase type enzymes, which break down the starch to produce maltodextrins, compounds of high nutritional value, and glucose.

This invention also relates to a method for making a liquid product of plant origin. Said method comprises the following steps:
(a) hydration and grinding of the tiger nuts and filtering of the resulting liquid;
(b) obtaining of quinoa flour free from saponins.
   Some methods;
(c) mixing of the filtrate of tiger nut with the quinoa flour;
(d) addition of α-amylases and, optionally, addition of additives;
(e) homogenisation; and
(f) refrigeration.

A preservation treatment can be carried out, optionally, after the step of homogenisation

Some methods for desaponification of quinoa suitable for a method according to the invention are:
- washing by agitation and turbulence:

- friction or abrasion method (scarification or polishing);
- dry-process thermomechanical method;
- chemical method.

Advantageously, the liquid product of plant origin of this invention can be used as a substitute for milk of animal origin and substitute for other plant products of high nutritional value (for example, soya derivatives).

The use of the plant liquid product of the invention offers a number of advantages:
- good organoleptic characteristics, especially a pleasant flavour
- totally natural origin, given that it is obtained from tiger nuts and quinoa
- totally vegetable product
- high nutritional value
- presence of maltodextrins of high dietary value
- possibility of applying preservation treatments (pasteurisation, conventional sterilisation, UHT, atomisation, freeze-drying).

### EXAMPLES

There follows an example by way of non-restrictive illustrative example of the invention.

### Example I. Method for making a plant liquid product of high nutritional value and pleasant flavour

### Raw materials:

- tiger nut (*Cyperus esculentus*)
- quinoa (*Chenopodium quinoa Willdenow*)

**(a)** Washing and soaking of the tiger nuts
**(b)** Grinding in decalcified water at a temperature of 12-14°C
**(c)** Filtering
**(d)** Standardisation (fats 3.5-4.2%: proteins 3.2-3.5%; EST 12.5-14.5%; calcium 800-1200 ppm)
**(e)** Obtaining fine quinoa flour free from saponins and with no extraneous flavours
**(f)** Mixing of the filtrate of tiger nut with the quinoa flour
**(g)** Addition of α-amylases (α-amylase with optimum working temperature at 60-100°C) which permits the starch to be hydrolysed and maltodextrins to be obtained.
**(h)** Addition of emulgents and stabilisers
**(i)** Homogenisation in one or two steps
**(j)** Pasteurisation and packaging for preservation under refrigeration.

## Claims

1. Liquid product of plant origin **characterised in that** it is an aqueous solution that essentially contains an extract of tiger nut (*Cyperus esculentus*), an extract of quinoa (*Chenopodium quinoa Willdenow*) and a mixture of enzymes of the α-amylase type.

2. Liquid product of plant origin as claimed in Claim 1, in which said mixture of enzymes of α-amylase type includes enzymes of different optimum temperatures of hydrolysis of starch.

3. Liquid product of plant origin as claimed in Claim 1 or 2, which comprises maltodextrins produced from the breakdown of the starch by said mixture of enzymes.

4. Liquid product of plant origin as claimed in any of the previous claims, in which the variety of quinoa used is selected from among the group which comprises Kancolla, Sajama, Cheweca and Blanca Juli.

5. Liquid product as claimed in any of the previous claims, in which the extract of tiger nut is between 5% and 20%, preferably between 8% and 16%.

6. Liquid product as claimed in any of the previous claims, in which the extract of quinoa is between 5% and 20%, preferably between 7% and 10%.

7. Method for making a liquid product of plant origin as claimed in any of the previous claims, **characterised in that** it comprises:
(a) hydration and grinding of the tiger nuts and filtering of the resulting liquid;
(b) obtaining of quinoa flour free from saponins.
(c) mixing of the filtrate of tiger nut with the quinoa flour;
(d) addition of α-amylases and, optionally, addition of additives;
(e) homogenisation; and
(f) refrigeration.

8. Method as claimed in claim 7, in which a preservation treatment is carried out after the step of homogenisation.

9. Method as claimed in Claim 8, in which said preservation treatment is selected from among pasteurisation, conventional sterilisation, UHT, atomisation and freeze-drying.

10. Use of a liquid product of plant origin as claimed in any of the previous claims as a nutritional substitute for milk of animal origin or plant products of high nutritional value.
